# EUROPÄISCHE PATENTSCHRIFT

(11) **EP 3 069 594 B1**
(45) Veröffentlichungstag und Bekanntmachung des Hinweises auf die Patenterteilung: **22.08.2018**
(21) Anmeldenummer: 16150376.8
(22) Anmeldetag: 07.01.2016
(51) Int. Cl.: A01D 34/13, A01D 34/17, A01D 41/14

(54) **EINSTELLBARER NIEDERHALTER**
ADJUSTABLE CLAMP
SERRE-FLAN REGLABLE

(30) Priorität: 17.03.2015 DE 102015103922
(43) Veröffentlichungstag der Anmeldung: 21.09.2016
(73) Patentinhaber: CLAAS Selbstfahrende Erntemaschinen GmbH, 33428 Harsewinkel (DE)
(72) Erfinder: Kiffmeier, Norbert, 33428 Harsewinkel (DE); Nöring, Jens, 48477 Hörstel-Bevergern (DE)

(56) Entgegenhaltungen:
- EP-A1- 1 498 017
- CH-A- 182 632
- US-A- 892 799
- US-A- 3 490 215
- US-A1- 2002 035 827
- US-B1- 6 735 931

## Beschreibung

Die vorliegende Erfindung betrifft einen einstellbaren Niederhalter gemäß dem Oberbegriff des Anspruches 1. Weiterhin betrifft die Erfindung ein Vorsatzgerät gemäß dem Oberbegriff des Anspruches 11. Aus der WO 2014/183186 A1 sind ein Niederhalter sowie ein Vorsatzgerät der eingangs genannten Art vorbekannt. Der Niederhalter ist an einem Messerbalken des Vorsatzgerätes oberhalb von mittels einer Messerschiene hin und her bewegten Mähmesserklingen angeordnet. Unterhalb der Mähmesserklinge sind so genannte Mähfinger angeordnet, die einen oder mehrere Finger aufweisen können, die sich in Längsrichtung der Mähmesserklinge erstrecken. Den Mähfingern kommt die Aufgabe zu, als Gegenmesser und Stützmittel der Mähmesserklinge zu dienen. Der jeweilige Niederhalter wirkt mit dem korrespondierend angeordneten Mähfinger in der Weise zusammen, dass mittels des Niederhalters ein Spaltmaß zwischen diesen vorgebbar ist, um eine exakte Schnittbewegung zwischen den Mähmesserklingen und den Mähfingern zu erreichen. Dieses Spaltmaß muss regelmäßig überprüft und nachgestellt werden, um exzessive Reibung zwischen den Mähmesserklingen und den Mähfingern zu verhindern. Zur Verbesserung der Einstellbarkeit ist gemäß der WO 2014/183186 A1 ein elastisch komprimierbares Kissen zwischen dem Messerbalken und einem Befestigungsabschnitt des Niederhalters angeordnet. Der Betrag der Stauchung des Kissens, welcher von dem flächigen, sich über die gesamte Breite des Niederhalters erstreckenden Befestigungsabschnittes auf das Kissen ausgeübt wird, ist mittels einer Verstellschraube einstellbar, um das Spaltmaß zu verändern.

Als nachteilig an diesem Niederhalter ist zu sehen, dass das elastisch komprimierbare Kissen auf Grund der Witterungseinflüsse und Alterung seine vorgegebenen elastischen Eigenschaften verliert, wodurch die Präzision der Einstellung abnimmt. Dies kann dabei über die Längsausdehnung des Vorsatzgerätes gesehen zu unterschiedlichen Einstellergebnissen führen. Zudem lässt das elastisch komprimierbare Kissen keine reproduzierbare Verstellung zu, wenn Toleranzen im Material des Kissens bei gleichem Verstellweg der Verstellschraube zu unterschiedlichen Stauchungen des Kissens und damit zu unterschiedlichen Spaltmaßen führen. Weiterhin stellt es einen nicht unerheblichen Aufwand dar, einzelne Kissen auszutauschen, da zuvor der jeweilige Niederhalter von dem Messerbalken gelöst werden muss, um ein altes verschlissenes Kissen durch ein neues Kissen ersetzen zu können.

Die Druckschrift US 3,490,215 offenbart einen Niederhalter mit zwei Befestigungsarmen, die jeweils einen bogenförmigen Abschnitt aufweisen, an den sich ein im Wesentlichen horizontal verlaufender Befestigungsabschnitt anschließt, wobei zwischen benachbarten Befestigungsarmen ein durch ein Einstellmittel in vertikaler Richtung verstellbarer Einstellarm angeordnet ist.

Somit liegt der vorliegenden Erfindung die Aufgabe zu Grunde, einen Niederhalter sowie ein Vorsatzgerät der eingangs genannten Art derart weiterzuentwickeln, dass das Spaltmaß zwischen Mähfingern und Mähmesserklingen einfacher und genauer einstellbar ist.

Diese Aufgabe wird erfindungsgemäß durch einen einstellbaren Niederhalter mit den kennzeichnenden Merkmalen des Anspruches 1 sowie durch ein Vorsatzgerät mit den kennzeichnenden Merkmalen des Anspruches 11 gelöst.

Vorteilhafte Ausgestaltungen der Erfindung sind Gegenstand der Unteransprüche.

Gemäß dem Anspruch 1 wird vorgeschlagen, dass die zumindest zwei Befestigungsarme jeweils einen bogenförmigen Abschnitt aufweisen, an den sich ein im Wesentlichen horizontal verlaufender Befestigungsabschnitt anschließt, wobei zwischen benachbarten Befestigungsarmen ein durch eine Einstellmittel in vertikaler Richtung verstellbarer Einstellarm angeordnet ist, dessen Verstellung ein Kippmoment auf die jeweiligen bogenförmigen Abschnitte der Befestigungsarme hervorruft. Der aus einem Metall bestehende Niederhalter weist im Vergleich zu einem elastisch komprimierbaren Kissen weitgehend alterungsunabhängige Materialeigenschaften auf, so dass dieser nicht in Folge von Alterung und Materialermüdung zu Ungenauigkeiten in der Einstellung des Spaltmaßes zwischen Mähfingern und Mähmesserklingen führt. Ein weiterer Vorteil besteht darin, dass sich auf Grund der präziseren Einstellbarkeit eine verbesserte Schneidwirkung erzielen lässt.

Insbesondere kann sich der Einstellarm ausgehend von dem Mittenabschnitt im Wesentlich in einer horizontalen Ebene erstrecken. Daraus resultiert ein langer Hebel des Einstellarmes.

Dabei sollte das freie Ende des Einstellarmes in einer Ebene oberhalb der Befestigungsabschnitte der Befestigungsarme liegen. Hierdurch wird die Zugänglichkeit des Einstellarmes erleichtert.

Vorzugsweise kann der Befestigungsabschnitt zumindest zwei sich in Richtung des Mittenabschnittes erstreckende Ausnehmungen aufweisen, zwischen denen sich der Einstellarm ausbildet. Hierdurch kann ein langer Hebel des Einstellarmes realisiert werden. Zudem kann ein einfaches und leichtgängiges Einstellen erreicht werden, da die Zugänglichkeit unterhalb des Einstellarmes verbessert wird. Die Ausnehmungen können sich im Wesentlichen parallel zu den Befestigungsarmen erstrecken. Dadurch kann das Auftreten hoher Bauteilspannungen vermieden werden.

Des Weiteren können die Befestigungsabschnitte eine Durchbohrung aufweisen, welche der formschlüssigen Verbindung mit einem Halteelement dienen, welches dem Niederhalter zugeordnet ist.

Das Einstellmittel umfasst einen Gewindeabschnitt eine Einstellmutter, ein Sicherungselement sowie das Halteelement.

Bevorzugt kann das Halteelement den Gewindeabschnitt aufweisen, auf welchem die Einstellmutter in vertikaler Richtung verstellbar geführt ist, mit der eine von dem Halteelement weg gerichtete Kraft auf den Einstellarm ausübbar ist. Der Gewindeabschnitt kann sich dabei im Wesentlichen senkrecht zu der Oberfläche des Halteelementes erstrecken. Mittels der Einstellmutter lässt sich das Kippmoment, welches auf die jeweiligen bogenförmigen Abschnitte der Befestigungsarme ausgeübt wird, einfach einstellen.

Ein weiterer Vorteil des langen Hebelarmes besteht darin, dass Bauteilspannungen auf Grund des geringen Abstandes zwischen den Verbindungsmitteln, die der formschlüssigen Verbindung der Befestigungsabschnitte dienen, und dem Gewindeabschnitt verringert werden können. Ebenfalls wird durch diese Anordnung die Relevanz der Lage des Gewindeabschnittes gemindert.

Insbesondere kann der Gewindeabschnitt eine geringe Steigung aufweisen. Hierdurch lässt sich eine sehr genaue Einstellung des Spaltmaßes erreichen. Die Betätigung der Einstellmutter kann sehr feinfühlig erfolgen.

Dabei kann der Einstellarm an seinem freien Ende eine Durchbohrung aufweisen, welche von dem Gewindeabschnitt durchdrungen ist. Somit kann der Einstellarm entlang des Gewindeabschnittes sicher geführt werden. Eine gleichmäßige, symmetrische Belastung des Einstellarmes mittels der Einstellmutter kann somit gewährleistet werden.

Der Gewindeabschnitt ist als eine Schraube mit polygonalem Schraubenkopf ausgeführt. Dies erlaubt einen einfachen Austausch des Gewindeabschnittes, wenn dieser einem verstärkten Verschleiß ausgesetzt ist und damit die Einstellmöglichkeit des Einstellarmes durch die Einstellmutter eingeschränkt wird.

Erfindungsgemäß weist das Haltelement eine mit der äußeren Form des Schraubenkopfes korrespondierende Aussparung auf, in welcher der Schraubenkopf zumindest abschnittsweise gehaltert ist. Diese Ausnehmung bildet ein Widerlager für den Schraubenkopf. Dies hat den Vorteil, dass bei der Betätigung der Einstellmutter der Schraubenkopf nicht zusätzlich mit einem Werkzeug gesichert werden muss.

Weiterhin sollte auf dem Gewindeabschnitt eine Kontermutter angeordnet sein, welche eine in Richtung des Halteelementes gerichtete Druckkraft auf den Einstellarm ausübt. Die Kontermutter kann am Ende eines Einstellvorganges des Niederhalters angezogen werden, um die Position der Einstellmutter und damit des Einstellarmes zu fixieren.

Vorteilhafterweise kann der Mittelpunkt der Durchbohrung des Einstellarmes einen Versatz in horizontaler Richtung gegenüber dem jeweiligen Mittelpunkt der Durchbohrungen der Befestigungsabschnitte aufweisen.

Weiterhin wird die eingangs gestellte Aufgabe durch ein Vorsatzgerät mit einem oszillierend angetriebenen Schnittsystem, welche eine Vielzahl von an einem Messerbalken angeordneten Mähmesserklingen aufweist, die mittels unterhalb der Mähmesserklingen angeordneten Mähfingern geführt sind, sowie mit oberhalb der Mähmesserklingen angeordneten Niederhaltern dadurch gelöst, dass ein einstellbarer Niederhalter nach zumindest einem der vorangehenden Ansprüche 1 bis 11 vorgesehen ist.

Die vorliegende Erfindung wird nachstehend anhand eines in den Zeichnungen dargestellten Ausführungsbeispiels näher beschrieben.

Es zeigen:
- Fig.1: eine schematische Teilansicht eines Mähdreschers mit daran angeordnetem Schneidwerk;
- Fig. 2: eine Draufsicht auf einen Niederhalters eines Schnittsystems eines Schneidwerkes von schräg hinten;
- Fig. 3: eine Ansicht des Niederhalters gemäß Fig. 2 von der Seite mit Messerschiene;
- Fig. 4: eine Draufsicht auf den Niederhalter gemäß Fig. 2 ohne Mähmesser.

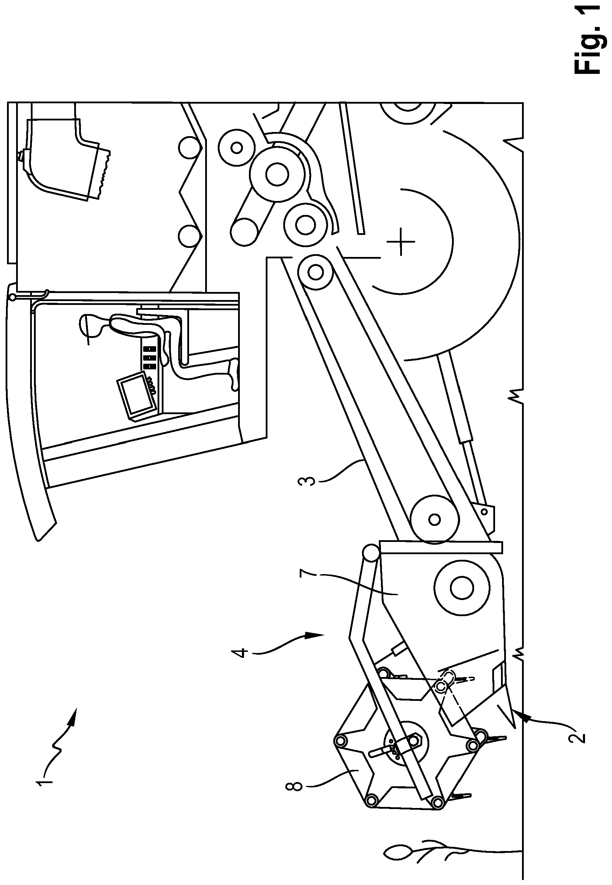

In der Fig. 1 ist eine als selbstfahrender Mähdrescher 1 ausgeführte landwirtschaftliche Arbeitsmaschine in einer Teilansicht von der Seite während der Erntefahrt dargestellt. Frontseitig weist der Mähdrescher 1 einen vertikal schwenkbaren Einzugsschacht 3 auf, an dem ein als Schneidwerk 4 ausgeführter Aufnahmevorsatz angeordnet ist. Mit dem schwenkbaren Einzugsschacht 3 ist das Schneidwerk 4 auf eine gewünschte Schneidwerkshöhe, das heißt eine Beabstandung zum Boden, einstellbar. Das Schneidwerk 4 besteht aus einem Schneidtisch 7 und aus einer an dem Schneidtisch 7 befestigten, rotierend angetriebenen Haspel 8, wobei die Haspel 8 gegenüber dem Schneidtisch 7 höhenverstellbar sowie in horizontaler Richtung verstellbar ist. Das zu erntende Erntegut wird von einem an der vorderen Kante des Schneidtischs 7 angeordneten Schnittsystem 2 abgeschnitten und das geschnittene Erntegut anschließend mit Hilfe der Haspel 8 zu einer im Schneidtisch 7 angeordneten, rotierend angetriebenen Einzugsschnecke gefördert. Die Einzugsschnecke führt das Erntegut dem Einzugsschacht 3 zu, der das Erntegut an in dem Mähdrescher 1 angeordnete Arbeitsaggregate übergibt.

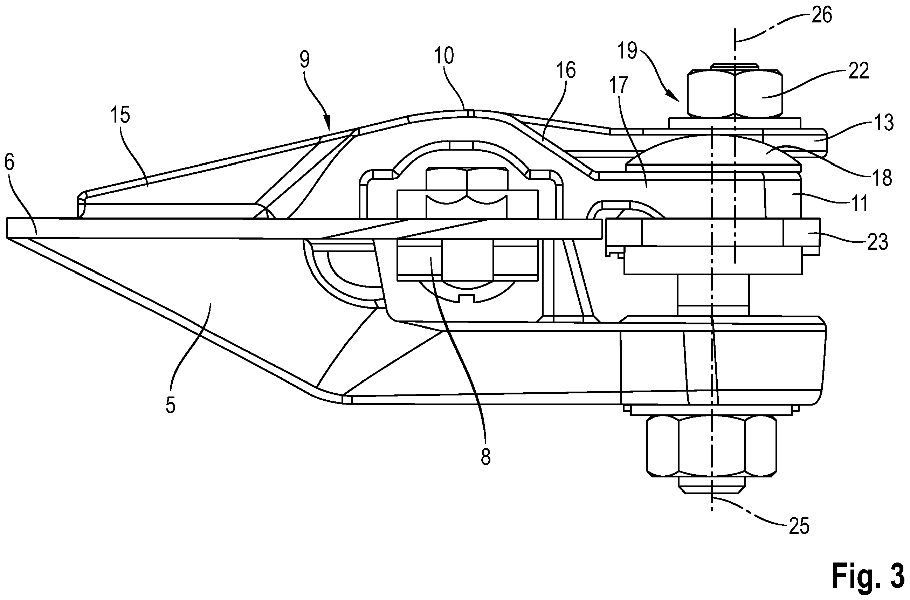

Das Schnittsystem 2 ist an einem Messerbalken angeordnet ist. Das an dem Messerbalken angeordnete Schnittsystem 2 umfasst nebeneinander angeordnete Mähmesserklingen 6, die an zumindest einer hin-und herbewegbaren Messerschiene 8, wie sie in Fig. 3 angedeutet ist, angeordnet sind, sowie unterhalb der Mähmesserklingen 6 an dem Messerbalken angeordnete Mähfinger 5, die als Gegenmesser und Stützmittel der Mähmesserklingen 6 ausgebildet sind. Das Schnittsystem 2 ist durch die zumindest eine Messerschiene 8 mit dem Schneidwerk 4 verbunden. Den Mähfingern 5 gegenüberliegend sind Niederhalter 9 in korrespondierenden Position an dem Messerbalken angeordnet. Die Positionierung ist derart gewählt, dass die unterhalb der Mähmesserklingen 6 angeordneten Mähfinger 5 und die oberhalb der Mähmesserklingen 6 angeordneten Niederhalter 9 mittels gemeinsamer Schraubverbindungen oder sonstiger lösbarer Verbindungen an dem Messerbalken befestigt sind. Zwischen den Mähfingern 5 und den korrespondierend hierzu positionierten Niederhaltern 9 ist die Messerschiene 8 in Längsrichtung geführt angeordnet.

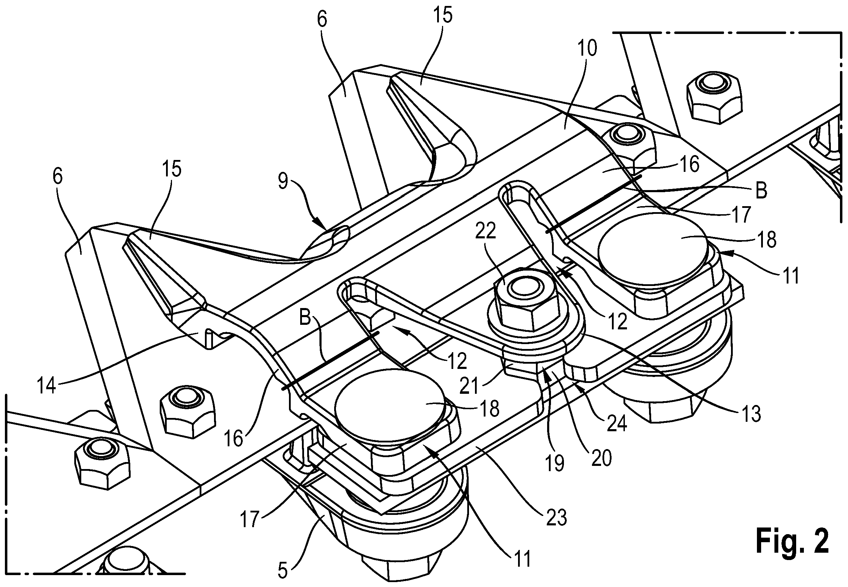

Der jeweilige Niederhalter 9, von dem in den Fig. 2 bis 4 jeweils nur einer dargestellt ist, weist einen nach außen gewölbten Mittenabschnitt 10 auf, welcher auf seiner den Mähmesserklingen 6 zugewandten Unterseite mit einer Profilierung versehen ist. Die Profilierung ist an die äußere Kontur der Messerschiene 8 (zur besseren Veranschaulichung nicht dargestellt) sowie der Befestigung der Mähmesserklinge 6 an der Messerschiene 8 dienenden Schraubverbindungen angepasst, so dass die Messerschiene 8 die Unterseite des Mittenabschnittes 10 des Niederhalters 9 möglichst berührungslos passieren kann. Von dem Mittenabschnitt 10 des Niederhalters 9 ausgehend erstrecken sich in von dem Messerbalken abgewandter Richtung, das heißt den Mähmesserklingen 6 gegenüberliegend, zwei der Befestigung an diesem dienende Befestigungsarme 11. Zwischen den beiden Befestigungsarmen 11 ist durch bis in den Mittenabschnitt 10 hineinreichende Ausnehmungen 12 ein Einstellarm 13 ausgebildet, welcher sich ebenfalls ausgehend von dem Mittenabschnitt 10 in vom Messerbalken abgewandter Richtung erstreckt. Auf der dem Messerbalken zugewandten Seite des Mittenabschnittes 10 des Niederhalters 9 ist zumindest ein Niederhalterabschnitt 14 vorgesehen, welcher Niederhalterarme 15 umfasst, die sich abschnittsweise in Längsrichtung der Mähmesserklingen 6 erstrecken. Die Niederhalterarme 15 sind korrespondierend zu den Mähfingern 5 angeordnet, so dass die Messerschiene 8 mit den daran befindlichen Mähmesserklingen 6 mit einem geringem Spaltmaß beziehungsweise Spiel zwischen diesen geführt ist.

Die Befestigungsarme 11 weisen ausgehend vom Mittenabschnitt 10 einen gekrümmten beziehungsweise bogenförmigen, in Richtung des Messerbalkens abfallenden Abschnitt 16 auf, welcher in einen im Wesentlichen horizontal verlaufenden Befestigungsabschnitt 17 mündet. Der jeweilige Befestigungsabschnitt 17 der Befestigungsarme 11 dient dazu, den jeweiligen Niederhalter 9 mittels Schraubverbindungen mit dem Messerbalken lösbar zu verbinden. Der Einstellarm 13 erstreckt sich nahezu parallel zu der Oberfläche des Messerbalkens, so dass dessen freies Ende in einer Ebene oberhalb des Befestigungsabschnittes 17 der Befestigungsarme 11 liegt, was insbesondere aus der Darstellung in Fig. 2 ersichtlich ist. Sowohl die Befestigungsabschnitte 17 als auch das freie Ende des Einstellarmes 13 weisen jeweils eine Durchbohrung auf, die der Aufnahme einer Befestigungsschraube 18 beziehungsweise eines Einstellmittels 19 dienen. Hierbei ist die Durchbohrung im freien Ende des Einstellarmes 13 gegenüber den Durchbohrungen in den Befestigungsabschnitten 17 versetzt angeordnet. Insbesondere ist der Abstand des Mittelpunktes der Durchbohrungen in den Befestigungsabschnitten 17 zum Mittenabschnitt 10 geringer als der der Durchbohrung des freien Endes des Einstellarmes 13, wie insbesondere aus Fig. 3 ersichtlich ist. In der Darstellung in Fig. 3 ist die jeweilige Mittel- beziehungsweise Längsachse einer der Befestigungsschrauben 18 sowie des Einstellmittels 19 durch Strichlinien 25, 26 angedeutet. Der Abstand der Strichlinien 25, 26 zueinander in horizontaler Richtung ist relativ gering. Auf Grund der Tiefe der Ausnehmungen 12 wird die Bauteilspannung aus dem geringen Abstand der Strichlinien 25, 26 zueinander verringert.

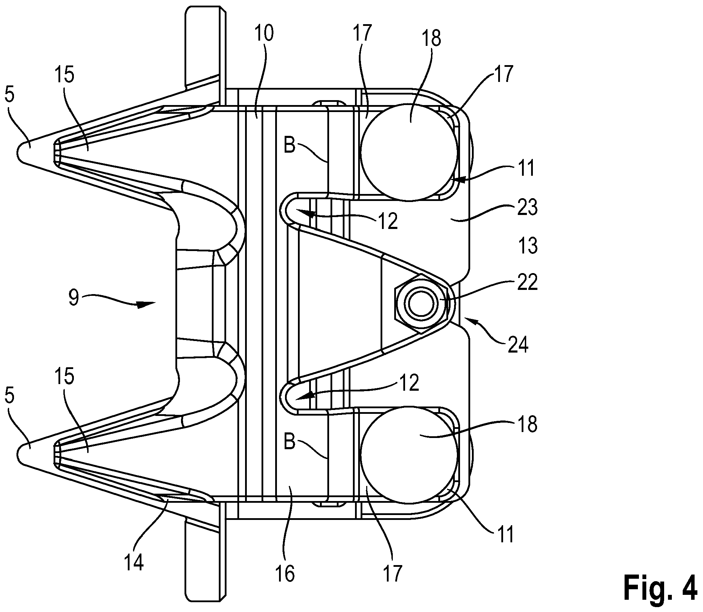

Die Befestigung der Mähfinger 5 und der korrespondierend zu diesen angeordneten Niederhalter 9 am Messerbalken erfolgt mittels der als konventionelle Flachrundschrauben ausgeführten Befestigungsschrauben 18, wie aus den Fig. 2 und 4 gut ersichtlich ist. Hierdurch ist ein grob vordefiniertes Spiel der Mähmesserklinge 6 gegeben. Der Einstellarm 13 ist mittels des Einstellmittels 19, welches aus einer Kombination aus einer Gewindestange, einem Gewindeabschnitt einer Verstellschraube 20, einer Einstellmutter 21, einem Sicherungselement, insbesondere einer Kontermutter 22, und einem Halteelement 23 gebildet ist, justierbar und gegen ein Losdrehen sicherbar. Das Halteelement 23 ist zwischen dem Messerbalken und den Befestigungsabschnitten 17 angeordnet. Hierzu ist das Halteelement 23 im Wesentlichen plattenförmig ausgeführt. Das Halteelement 23 weist mit den Durchbohrungen der Befestigungsabschnitte 17 korrespondierende Durchbohrungen auf, welche von den Flachrundschrauben durchdrungen sind. Hierdurch ist das Halteelement 23 gegenüber dem Messerbalken verdrehsicher angeordnet. Das Halteelement 23 weist im Bereich des Einstellarmes 13 eine Ausnehmung 24 auf, in welcher der Kopf der Verstellschraube 20 gegen Verdrehen gesichert ist. Dies wird durch einen Formschluss zwischen der Aussparung 24 und dem Kopf der Verstellschraube 20 erreicht. Auf dem Gewindeabschnitt der Verstellschraube 20 unterhalb des Einstellarmes 17 ist die Einstellmutter 21 angeordnet. Oberhalb des Einstellarmes 17 ist die Kontermutter 22 angeordnet, welche der Sicherung der getätigten Einstellung dient. Die Feinheit beziehungsweise Genauigkeit einer Justierung lässt sich durch eine entsprechende Auswahl die Steigung des Gewindes auf dem Gewindeabschnitt der Verstellschraube 20 verändern.

Zur Einstellung des Spiels zwischen dem Niederhalter 9 und der Mähmesserklinge 6, welche auf Grund von Verschleiß an den Mähmesserklingen 6 während des Betriebes notwendig wird, wird zunächst die Kontermutter 22 gelöst. Im Anschluss daran wird durch das Drehen der Einstellmutter 21 der Einstellhebel 13 in vertikaler Richtung bewegt, wodurch ein Kippmoment auf den Niederhalter 9 ausgeübt wird, welches ein Schwenken der Niederhalterarme 15 nach unten bewirkt. Die Kippbewegung erfolgt dabei im unteren Bereich des bogenförmigen Abschnittes 16 der Befestigungsarme 17 um eine horizontale Biegelinie, was durch eine Linie B angedeutet ist. Die jeweiligen bogenförmigen Abschnitte 16 der Befestigungsarme 17 fungieren dabei als eine Art Filmscharnier. Nachdem das gewünschte Spiel eingestellt wurde, wird diese Einstellung des Niederhalters 9 durch das Anziehen der Kontermutter 22 gesichert.

**Bezugszeichenliste**

| | | | |
|---|---|---|---|
| **1** | Mähdrescher | **B** | Linie |
| **2** | Schnittsystem | | |
| **3** | Einzugsschacht | | |
| **4** | Schneidwerk | | |
| **5** | Mähfinger | | |
| **6** | Mähmesserklinge | | |
| **7** | Schneidtisch | | |
| **8** | Haspel | | |
| **9** | Niederhalter | | |
| **10** | Mittenabschnitt | | |
| **11** | Befestigungsarm | | |
| **12** | Ausnehmung | | |
| **13** | Einstellarm | | |
| **14** | Niederhalterabschnitt | | |
| **15** | Niederhalterarm | | |
| **16** | Abschnitt | | |
| **17** | Befestigungsabschnitt | | |
| **18** | Befestigungsschraube | | |
| **19** | Einstellmittel | | |
| **20** | Verstellschraube | | |
| **21** | Einstellmutter | | |
| **22** | Kontermutter | | |
| **23** | Halteelement | | |
| **24** | Aussparung | | |
| **25** | Strichlinie | | |
| **26** | Strichlinie | | |

## Patentansprüche

1. Einstellbarer Niederhalter (9) zur Anordnung an einem Messerbalken eines Vorsatzgerätes (4) welcher einen Niederhalterabschnitt (14), einen bogenförmigen Mittenabschnitt (10) und zumindest zwei Befestigungsarme (11) aufweist, wobei die zumindest zwei Befestigungsarme (11) jeweils einen bogenförmigen Abschnitt (16) aufweisen, an den sich ein im Wesentlichen horizontal verlaufender Befestigungsabschnitt (17) anschließt, wobei zwischen benachbarten Befestigungsarmen (11) ein durch ein Einstellmittel (19) in vertikaler Richtung verstellbarer Einstellarm (13) angeordnet ist, dessen Verstellung ein Kippmoment auf die jeweiligen bogenförmigen Abschnitte (16) der Befestigungsarme (11) hervorruft, wobei das Einstellmittel (19) einen Gewindeabschnitt (20), eine Einstellmutter (21), ein Sicherungselement (22) sowie das Halteelement (23) umfasst, und dass der Gewindeabschnitt als eine Schraube (20) mit polygonalem Schraubenkopf ausgeführt ist, **dadurch gekennzeichnet, dass** das Haltelement (23) eine mit der äußeren Form des Schraubenkopfes korrespondierende Aussparung (24) aufweist, in der der Schraubenkopf zumindest abschnittsweise gehaltert ist.

2. Niederhalter (9) nach Anspruch 1, **dadurch gekennzeichnet, dass** sich der Einstellarm (13) ausgehend von dem Mittenabschnitt (10) im Wesentlichen in einer horizontalen Ebene erstreckt.

3. Niederhalter (9) nach einem der Ansprüche 1 oder 2, **dadurch gekennzeichnet, dass** das freie Ende des Einstellarmes (13) in einer Ebene oberhalb der Befestigungsabschnitte (17) der Befestigungsarme (11) liegt.

4. Niederhalter (9) nach einem der Ansprüche 1 bis 3, **dadurch gekennzeichnet, dass** der Befestigungsabschnitt (17) zumindest zwei sich in Richtung des Mittenabschnittes (10) erstreckende Ausnehmungen (12) aufweist, zwischen denen sich der Einstellarm (13) ausbildet.

5. Niederhalter (9) nach einem der Ansprüche 1 bis 4, **dadurch gekennzeichnet, dass** die Befestigungsabschnitte (17) eine Durchbohrung aufweisen, welche der formschlüssigen Verbindung mit dem Halteelement (23) dienen, welches dem Niederhalter (9) zugeordnet ist.

6. Niederhalter (9) nach einem der Ansprüche 1 bis 5, **dadurch gekennzeichnet, dass** dem Halteelement (23) der Gewindeabschnitt (20) zugeordnet ist, auf welchem die Einstellmutter (21) in vertikaler Richtung verstellbar geführt ist, mit der eine von dem Halteelement (23) weg gerichtete Kraft auf den Einstellarm (13) ausübbar ist.

7. Niederhalter (9) nach einem der Ansprüche 1 bis 6, **dadurch gekennzeichnet, dass** der Gewindeabschnitt (20) eine Steigung aufweist ist.

8. Niederhalter (9) nach einem der Ansprüche 1 bis 7, **dadurch gekennzeichnet, dass** der Einstellarm (13) an seinem freien Ende eine Durchbohrung aufweist, welche von dem Gewindeabschnitt (20) durchdrungen ist.

9. Niederhalter (9) nach einem der Ansprüche 1 bis 8, **dadurch gekennzeichnet, dass** auf dem Gewindeabschnitt (20) eine als Sicherungselement ausgeführte Kontermutter (22) angeordnet ist, welche eine in Richtung des Halteelementes (23) gerichtete Druckkraft auf den Einstellarm (13) ausübt.

10. Niederhalter (9) nach einem der Ansprüche 8 oder 9, **dadurch gekennzeichnet, dass** der Mittelpunkt der Durchbohrung des Einstellarmes (13) einen Versatz in horizontaler Richtung gegenüber dem jeweiligen Mittelpunkt der Durchbohrungen der Befestigungsabschnitte (17) aufweist.

11. Vorsatzgerät (4) mit einem oszillierend angetriebenen Schnittsystem (2), welche eine Vielzahl von an einem Mähbalken angeordneten Mähmesserklingen (6) aufweist, die mittels unterhalb der Mähmesserklinge (6) angeordneten Mähfingern (5) geführt sind, sowie mit oberhalb der Mähmesserklinge (6) angeordneten Niederhaltern (9), **gekennzeichnet durch** einen einstellbaren Niederhalter (9) nach zumindest einem der vorangehenden Ansprüche 1 bis 10.

## Claims

1. An adjustable hold-down device (9) for arrangement on a cutter bar of a front attachment (4), which has a hold-down portion (14), an arcuate central portion (10) and at least two fixing arms (11), wherein the at least two fixing arms (11) respectively have an arcuate portion (16) adjoined by a substantially horizontally extending fixing portion (17), wherein arranged between adjacent fixing arms (11) is an adjusting arm (13) which is displaceable in the vertical direction by an adjusting means (9) and the displacement of which causes a tilting moment on the respective arcuate portions (16) of the fixing arms (11), wherein the adjusting means (19) includes a threaded portion (20), an adjusting nut (21), a securing element (22) and the holding element (23) and that the threaded portion is in the form of a screw (20) having a polygonal screw head, **characterised in that** the holding element (23) has an opening (24) which corresponds to the external shape of the screw head and in which the screw head is at least portion-wise held.

2. A hold-down device (9) according to claim 1 **characterised in that** the adjusting arm (13) extends from the central portion (10) substantially in a horizontal plane.

3. A hold-down device (9) according to one of claims 1 and 2 **characterised in that** the free end of the adjusting arm (13) lies in a plane above the fixing portions (17) of the fixing arms (11).

4. A hold-down device (9) according to one of claims 1 to 3 **characterised in that** the fixing portion (17) has at least two openings (12) which extend in the direction of the central portion (10) and between which the adjusting arm (13) is provided.

5. A hold-down device (9) according to one of claims 1 to 4 **characterised in that** the fixing portions (17) have a through bore serving for positively locking connection to the holding element (23) which is associated with the hold-down device (9).

6. A hold-down device (9) according to one of claims 1 to 5 **characterised in that** associated with the holding element (23) is the threaded portion (20) on which the adjusting nut (21) is guided displaceably in the vertical direction, with which a force directed away from the holding element (23) can be exerted on the adjusting arm (13).

7. A hold-down device (9) according to one of claims 1 to 6 **characterised in that** the threaded portion (20) has a pitch.

8. A hold-down device (9) according to one of claims 1 to 7 **characterised in that** at its free end the adjusting arm (13) has a through bore through which the threaded portion (20) passes.

9. A hold-down device (9) according to one of claims 1 to 8 **characterised in that** arranged on the threaded portion (20) is a lock nut (22) which is in the form of a securing element and which exerts on the adjusting arm (13) a pressure force directed in the direction of the holding element (23).

10. A hold-down device (9) according to one of claims 8 and 9 **characterised in that** the central point of the through bore in the adjusting arm (13) has a displacement in the horizontal direction with respect to the respective central point of the through bores in the fixing portions (17).

11. A front attachment (4) having an oscillatingly driven cutting system (2), which has a plurality of mowing knife blades (6) which are arranged on a cutter bar and which are guided by means of cutting fingers (5) arranged beneath the cutting knife blade (6), and comprising hold-down devices (9) arranged above the cutting knife blade (6), **characterised by** an adjustable hold-down device (9) according to at least one of preceding claims 1 to 10.

## Revendications

1. Abaisseur réglable (9) à monter sur une barre porte-lames d'un outil frontal (4), qui comporte une portion abaisseuse (14), une portion centrale arquée (10) et au moins deux bras de fixation (11), les au moins deux bras de fixation (11) comportant chacun une portion arquée (16) à laquelle se raccorde une portion de fixation (17) s'étendant sensiblement horizontalement, entre des bras de fixation voisins (11) étant disposé un bras de réglage (13) qui est réglable dans la direction verticale par l'intermédiaire d'un moyen de réglage (19) et dont le réglage impose un couple de basculement aux portions arquées respectives (16) des bras de fixation (11), le moyen de réglage (19) comportant une portion filetée (20), un écrou de réglage (21), un élément de blocage (22) ainsi que l'élément de maintien (23), et en ce que la portion filetée est conformée en vis (20) à tête de vis polygonale, **caractérisé en ce que** l'élément de maintien (23) comporte un évidement (24) qui correspond à la forme extérieure de la tête de vis et dans lequel la tête de vis est immobilisée au moins par endroits.

2. Abaisseur (9) selon la revendication 1, **caractérisé en ce qu'**à partir de la portion centrale (10), le bras de réglage (13) s'étend sensiblement dans un plan horizontal.

3. Abaisseur (9) selon une des revendications 1 ou 2, **caractérisé en ce que** l'extrémité libre du bras de réglage (13) se trouve dans un plan situé au-dessus des portions de fixation (17) des bras de fixation (11).

4. Abaisseur (9) selon une des revendications 1 à 3, **caractérisé en ce que** la portion de fixation (17) comporte au moins deux évidements (12) qui s'étendent dans la direction de la portion centrale (10) et entre lesquels est défini le bras de réglage (13).

5. Abaisseur (9) selon une des revendications 1 à 4, **caractérisé en ce que** les portions de fixation (17) comportent un perçage, lequel sert à la liaison par conjugaison de formes avec l'élément de maintien (23) qui est associé à l'abaisseur (9).

6. Abaisseur (9) selon une des revendications 1 à 5, **caractérisé en ce qu'**à l'élément de maintien (23) est associée une portion filetée (20) sur laquelle est guidé, de manière réglable dans la direction verticale, l'écrou de réglage (21) qui permet d'exercer sur le bras de réglage (13) une force orientée à l'opposé de l'élément de maintien (23).

7. Abaisseur (9) selon une des revendications 1 à 6, **caractérisé en ce que** la portion filetée (20) présente un pas.

8. Abaisseur (9) selon une des revendications 1 à 6, **caractérisé en ce que** le bras de réglage (13) comporte à son extrémité un perçage qui est traversé par la portion filetée (20).

9. Abaisseur (9) selon une des revendications 1 à 8, **caractérisé en ce que** sur la portion filetée (20) est disposé un contre-écrou (22) qui est conformé en élément de blocage et qui exerce sur le bras de réglage (13) une pression orientée dans la direction de l'élément de maintien (23).

10. Abaisseur (9) selon une des revendications 8 ou 9, **caractérisé en ce que** le centre du perçage du bras de réglage (13) présente un décalage dans la direction horizontale par rapport au centre respectif des perçages des portions de fixation (17) .

11. Outil frontal (4) comprenant un système de coupe (2) qui est entraîné de manière oscillante et qui comporte une pluralité de couteaux de fauchage (6) qui sont disposés sur un lamier et qui sont guidés au moyen de doigts de fauchage (5) disposés sous le couteau de fauchage (6), ainsi que comprenant des abaisseurs (9) disposés au-dessus du couteau de fauchage (6), **caractérisé par** un abaisseur réglable (9) selon au moins une des revendications précédentes 1 à 10.
